# EUROPEAN PATENT APPLICATION

(11) **EP 4 804 369 A1**
(43) Date of publication of application: **09.09.2026**
(21) Application number: 25305305.2
(22) Date of filing: 07.03.2025
(51) Int. Cl.: H02J 3/40, H02M 1/00, H02J 3/38

(54) **CONTROLLING A VOLTAGE-SOURCE CONVERTER CONNECTED TO AN ELECTRICITY NETWORK**

(71) Applicant: TotalEnergies OneTech, 92400 Courbevoie (FR)
(72) Inventor: Vilmann, Benjamin, Roskilde (DK); Saborío-Romano, Oscar, Roskilde (DK); Müller, Daniel, Kongens Lyngby (DK); ZOGHDAR, Behrouz, Courbevoie (FR); EL SIED, Moataz, Courbevoie (FR)
(74) Representative: Bandpay & Greuter

(57) **Abstract**

The disclosure notably relates to a method for controlling a voltage-source converter (VSC) connected to an electricity network. The method includes performing a grid forming (GFM) control of the converter, including a hybrid synchronization control (HSC), and further including a feedforward compensation of a transform of phase voltages in the electricity network. This forms an improved solution for controlling a voltage-source converter connected to an electricity network.

## Description

### TECHNICAL FIELD

The disclosure relates to the field of power electronics, and in particular to a method, program and system for controlling a voltage-source converter connected to an electricity network.

### BACKGROUND

Grid forming (GFM) control of voltage source converters (VSCs) is expected to have a significant role in the future power system. However, full-scale commercialization is yet to come, as the GFM technology struggles with fault-ride-through and network reconfigurations, despite the stability-enhancing features in weak grids and islanding robustness.

For high-power converter applications (HPCA), perfect reference tracking cannot be ensured due to improper timescale separation. It is assumed that the commercial GFM HPCA utilizes inner control loops, and its upper frequency bandwidth is bound to a switching frequency around 2 kHz. Despite almost global stability guarantees are provided for GFM-VSCs, with and without inner control loops, under the premise of perfect reference tracking, the stability guarantees are disqualified for HPCA, since the cascaded control loops cannot be properly distributed because of the upper bandwidth limitation.

The imperfect reference tracking thus implies that the control assumption setting the voltage magnitude reference equal to the *v_{d}* component is not valid. Consequently, there is a synchronization error angle, which jeopardizes stability during disturbances.

Today, grid codes explicitly require resilience of the GFM converters to withstand phase jumps, e.g., around ±60°. This is questioned as an unreasonable challenge to GFM control but is nonetheless mentioned in some grid codes. The phase jump, equivalent to power system events such as line tripping or connecting, forces the converter to resynchronize with the grid after the disturbance. The droop-based GFM control is of a power-based synchronization (PBS) type, utilizing the power imbalance equation Δ*P = P_{ref} - Pₘₑₐₛ* to synchronize. However, recent research on the transient stability of GFM-VSCs has shown that including a proportional control action on *v_{q}* in the active power control (APC) loop allows a proper frame alignment (the APC loop may also be referred to as the synchronization loop). This method is also known as the hybrid synchronization control (HSC) and resembles PLL-based formulations of GFM-VSCs. Recent advances in the control of GFM-VSCs have shown that a complex droop control formulation, based on the complex frequency definition, provides a theoretical basis for evaluating transient stability certificates. The HSC extension of the droop-based GFM control is also valid for the complex droop-control variant.

Known HSC implementations have a stability-enhancing feature by damping the synchronous resonance in strong grids, however HSC has shown to be badly performing in weak grid conditions.

Within this context, there is still a need for an improved method for controlling a voltage-source converter connected to an electricity network.

### SUMMARY

It is therefore provided a method for controlling a voltage-source converter (VSC) connected to an electricity network. The method includes performing a grid forming (GFM) control of the converter. Performing the GFM control includes a hybrid synchronization control (HSC). The method also comprises further including a feedforward compensation of a transform of phase voltages in the electricity network.

The method may comprise one or more of the following:
- the HSC includes a power-based synchronization (PBS) and a voltage-based synchronization (VBS), thereby obtaining a frequency output *ω* of the VSC equal to: *ω* = *ω_{ref}* + Δ*ωₚ* + Δ*ωᵥ,* where: *ω_{ref}* is a frequency reference, Δ*ωₚ* is a frequency contribution by the PBS, and Δ*ωᵥ* is a frequency contribution by the VBS;
- the feedforward compensation is applied to the PBS, Δ*ωᵥ* being calculated as Δ*ωᵥ = kᵥv_{q},* where *kᵥ* is a proportional gain and *v_{q}* is the transform of phase voltages in the electricity network;
- Δ*ωₚ* is calculated as Δ*P - F*(*s*)*kₚ*^{*-*1}*kᵥv_{q},* where Δ*P* is a power imbalance equal to Δ*P = P_{ref} - Pₘₑₐₛ, P_{ref}* is a reference power, *Pₘₑₐₛ* is a measured power, *F*(*s*) is a transfer function, *kₚ* is an active power droop constant;
- the transfer function *F*(*s*) is a lagging filter;
- the lagging filter comprises a term equal to *F*(*s*) = 1/(1 *+ sτ*)*,* where *τ* is a predetermined time constant;
- the lagging filter is one of :a low-pass filter of the type: *F*(*s*) = 1/(1 + *sτ*)*,* or a lag-compensator of the type *F(s)* = (1 + *sτ*₁)/(1 *+ sτ*₂)*,* where *τ*, *τ*₁ and *τ*₂ are predetermined time constants;
- the electricity network is a three-phased network;
- the electricity network is a weak grid network;
- the electricity network comprises wind turbines, solar generators and/or photovoltaic generators; and/or
- the transform (*v_{q}*) of phase voltages in the electricity network is a quadrature component of a Park transformation of three-phase voltages of the electricity network.

It is further provided a computer program comprising instructions for causing a processor to control a voltage-source converter (VSC) connected to an electricity network according to the method.

It is further provided a computer readable storage medium having recorded thereon the computer program.

It is further provided a system configured for controlling a voltage-source converter (VSC) connected to an electricity network according to the method.

It is further provided a voltage-source converter configured to be controlled according to the method. The voltage-source converter may be part of a system including the voltage-source converter and means for controlling the voltage-source converter according to the method, such as a system as above.

### BRIEF DESCRIPTION OF THE DRAWINGS

Non-limiting examples will now be described in reference to the accompanying drawings, where:

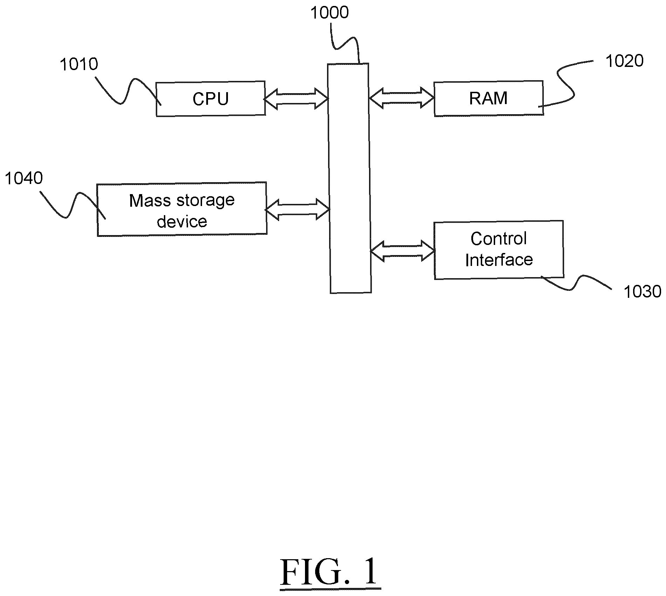

- FIG. 1 shows an example of the system; and
- FIG.s 2 to 14 illustrate the method.

### DETAILED DESCRIPTION

It is proposed a method for controlling a voltage-source converter (VSC) connected to an electricity network. The method includes performing a grid forming (GFM) control of the converter. The performing of the GFM control includes a hybrid synchronization control (HSC). The performing of the GFM control further includes a feedforward compensation of a transform of (i.e., the result of a transformation function applied to) phase voltages in the electricity network.

Such a method improves the control of the VSC connected to the electricity network. Indeed, the feedforward compensation cancels improper active power reference tracking of the basic hybrid synchronization control in high-power converter applications. The VSC may thus in examples form a high-power converter. For example, the method may provide the benefits of power-based synchronization (PBS) and voltage based synchronization (VBS) while reducing parasitic disturbances coming from the VBS. In examples, the HSC may include a PBS and a voltage-based synchronization (VBS). In other words, the frequency output by the VSC to the grid may only consider the frequency contribution by the PBS without parasitic disturbances from the VBS (such as a steady-state active power error).

Moreover, the feedforward compensation provides an improved transient stability for both weak and strong grids. This is particularly advantageous in grid-forming high-power converters due to bandwidth-induced reference frame misalignment.

The method may be computer-implemented. This means that steps (or substantially all the steps) of the method are executed by at least one computer, or any system alike. In particular, it is provided a system configured for controlling, according to the method, the VSC connected to an electricity network that may be a (e.g., distant) computer system (e.g., a server) integrated to or connected to and/or in communication with the VSC (e.g., over a network). By computer system, it is meant any system that comprises one or more processors and memory having stored therein instructions for causing the processor to perform computations, such computations serving to control the VSC according to the method in the present case.

In such a case, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system configured for controlling a voltage-source converter (VSC) connected to an electricity network. The system may comprise a processor coupled to a memory, the memory having recorded thereon a computer program comprising instructions for performing the method. In such a case, the system may be a workstation.

FIG. 1 shows an example of the system, wherein the system is a computer system, e.g., the workstation.

The workstation of the example comprises a central processing unit (CPU) 1010 connected to an internal communication BUS 1000, a random access memory (RAM) 1020 also connected to the BUS. A control interface 1030 may be configured to transmit control commands to the voltage-source converter. A mass storage device controller 1040 manages accesses to a mass memory device, such as hard drive. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magnetooptical disks. Any of the foregoing may be supplemented by, or incorporated in, specially designed ASICs (application-specific integrated circuits). The workstation may optionally also include a haptic device such as cursor control device, a keyboard or the like. A cursor control device is used in the workstation to permit, e.g., within a graphical user interface (UI) the user to select various commands and/or control targets for the controlling the voltage-source converter. The commands may be transmitted to circuitry configured to send instructions to the voltage-source converter (not shown).

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

Alternatively or additionally, steps of the method may be performed with specific (e.g., analogue) circuitry, comprising, e.g., analogue filters, inverters, operational amplifiers or the like.

Controlling a voltage-source converter (VSC) connected to an electricity network may refer to the application of control actions so as to exchange power between the VSC and the electricity network in a certain manner.

The electricity network may be a three-phased network.

In examples, the electricity network may be a weak grid network. As known in the field, a weak grid network has a relatively low short-circuit ratio and a relatively high impedance, that is, the weak grid has a relatively low fault current capacity, being thereby relatively highly sensitive to disturbances. Alternatively, the electricity network may be a strong grid network. As known in the field, a strong grid network has a relatively high short-circuit ratio and a relatively low impedance, that is, the strong grid can supply high fault currents, thereby being more resilient to disturbances.

The electricity network may comprise (e.g., one or more) wind turbines, solar generators and/or photovoltaic generators.

The method includes performing the GFM control of the converter. GFM control, as known in the art, is configured so as to allow the VSC to establish and maintain voltage and frequency independently of the voltage and frequency of the electricity network. Performing the GFM control includes the HSC. The HSC may be configured so as to enable the dynamical synchronization of the VSC, e.g., under varying grid conditions. The HSC may include, e.g., a proportional control action on the transform of phase voltages in the electricity network *v_{q}* in a synchronization loop so as to allows a frame alignment. In other words, the HSC may resemble phase-locked loop (PLL)-based formulations of GFM control.

The performing of the GFM control further includes a feedforward compensation of a transform of phase voltages in the electricity network. The feedforward compensation may be configured so as to minimize disturbances on the electricity network. In other words, the feed forward compensation is configured so as to reduce disturbances of a frequency output *ω* of the VSC to the electricity grid. The disturbance may comprise, e.g., a steady-state active power error present in the frequency output *ω* of the VSC.

The transform *v_{q}* of phase voltages in the electricity network may consist of any simplified representation of the phase voltages, such as a quadrature component of a Park transformation of three-phase voltages of the electricity network.

As known from the field of power electronics and electrical engineering, the Park transformation refers to a mathematical equation that converts three-phase AC signals into a rotating reference frame (also known as dq frame).

In examples, the Park transform, in the dqz-frame may be of the form: ${T}_{dqz} \left(ϕ\right) = \frac{2}{3} \left[\begin{matrix}cos \left(ϕ\right) & cos \left(ϕ-120°\right) & cos \left(ϕ+120°\right) \\ sin \left(ϕ\right) & sin \left(ϕ-120°\right) & sin \left(ϕ+120°\right) \\ \frac{1}{2} & \frac{1}{2} & \frac{1}{2}\end{matrix}\right] ,$ where ϕ designates the phase in degrees and *T_{dqz}*(.) designates the Park transformation. The dq-vector is then obtained by discarding the zero-sequence component.

In examples, the HSC may include a PBS and/or a voltage-based synchronization (VBS). The VBS addresses the issue of bandwidth-induced reference frame misalignment, in particular in a high-power application.

The use of VBS loops is indeed advantageous in GFM HPCAs. In effect, the converter control may otherwise not be able to apply the proper power flow with respect to its references.

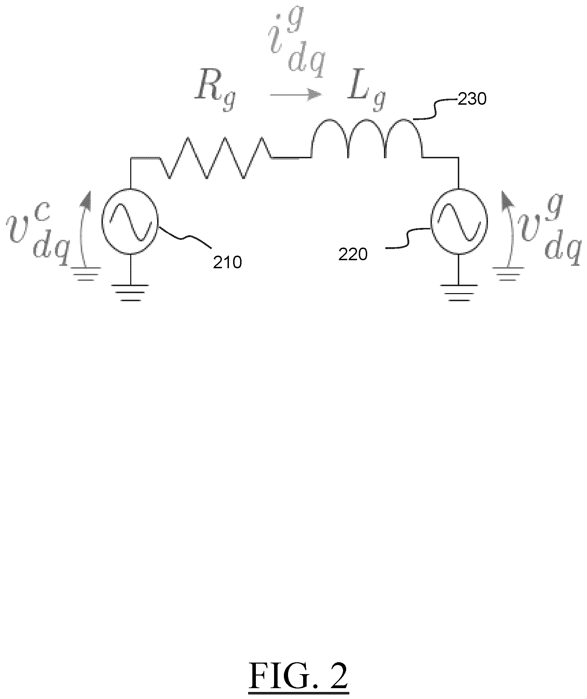

Reference is made to FIG. 2, illustrating a single converter infinite bus (SCIB) system, in dq-coordinates for the sake of simplicity. The SCIB shows a single-line diagram connected by two voltage sources, representing the converter 210 and the grid 220, connected via an impedance 230.

Considering complex power calculation using phasors, such that each dq-vector can be represented in complex form, e.g., ${v}_{dq}^{c} = {v}_{d}^{c} + {jv}_{q}^{c}$, and by assuming a balanced system, the steady state power flow from the converter may be expressed by the equation: ${S}_{c} = {v}_{dq}^{c} {\left({i}_{dq}^{g}\right)}^{∗} = {v}_{dq}^{c} {\left(\frac{{v}_{dq}^{c} - {v}_{dq}^{g}}{{Z}_{g}}\right)}^{∗}$ where * is the complex conjugate, *S_{c}* is the complex apparent power seen by the converter, *Z_{g}* the complex grid impedance, and ${v}_{dq}^{c} , {v}_{dq}^{c} , {i}_{dq}^{c}$ are dq-vectors (that is, expressed in dq-coordinates) of the converter voltage, grid voltage, and grid current, respectively. It is emphasized that the power flow is highly dependent on the converter-controlled voltage ${v}_{dq}^{c}$.

Classic converter VSC control design asserts that the voltage magnitude is equivalent to the d-component of the voltage, i.e., |*V*| *= v_{d}.* This assertion is only valid when *v_{q}* = 0, as it can be found that: $\left\{\begin{matrix}\left‖{v}_{dq}\right‖ = \sqrt{{υ}_{d}^{2} + {υ}_{q}^{2}} = {υ}_{d} , & if {υ}_{q} = 0 , \\ \left‖{v}_{dq}\right‖ = \sqrt{{υ}_{d}^{2} + {υ}_{q}^{2}} > {υ}_{d} , & if {υ}_{q} \neq 0 .\end{matrix}\right.$

Consequently, if *v_{q}* ≠ 0, then there is also considered an angle *ε_{θ}* = tan⁻¹(*v_{q}*/*v_{d}*) ≠ 0, which is the error between the ideal power flow desired by the controller references and the realized power flow from the synthesized converter voltage ${v}_{dq}^{c}$. This error is called the *reference frame misalignment.* Conventional grid-following (GFL) VSCs synchronize via a PLL that cancels any *v_{q}* ≠ 0.

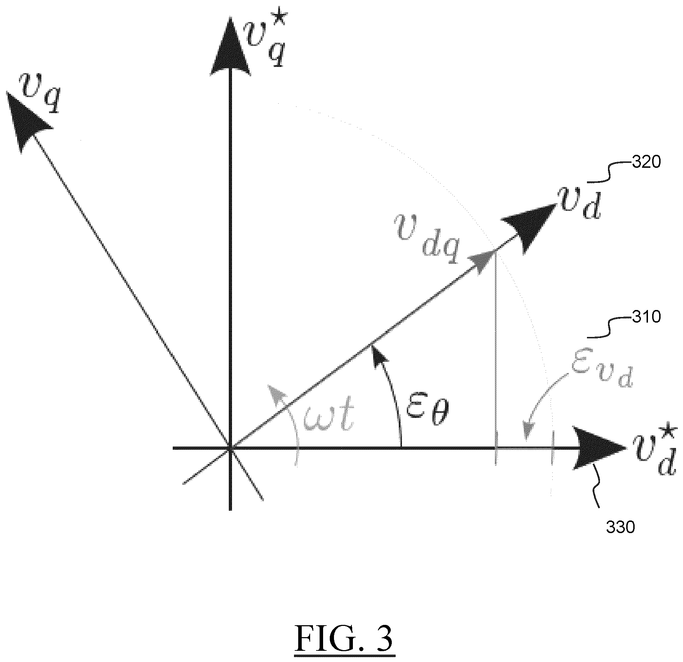

FIG. 3 illustrates the impact of *ε_{θ}* on the voltage error *ε_{v_{d}},* where ${v}_{dq}^{c , ∗}$ is related to the ideal power flow. FIG. 3 shows a voltage estimation error *ε_{v_{d}}* 310 as the projection from the vector *v_{d}* 320 onto the ideal power flow solution ${v}_{d}^{⋆}$ 330.

Considering that if the converter voltage ${v}_{dq}^{c}$ deviates from the intended converter voltage ${v}_{dq}^{c , ⋆}$, realized by the controller references, then the converter voltage can also be expressed by an estimator ${\hat{v}}_{dq}^{c}$, thereby following an expression as: $\begin{matrix}{\hat{v}}_{dq}^{c} & = {v}_{dq}^{c , ⋆} + {ε}_{{v}_{dq}}^{c} \\ & = \left({v}_{d}^{c , ⋆}+{ε}_{{v}_{d}}^{c}\right) + j \left({v}_{q}^{c , ⋆}+{ε}_{{v}_{q}}^{c}\right) \\ & = \left|\hat{V}\right| ∠ \hat{θ} ,\end{matrix}$ where *εₓ* represents the error of an arbitrary quantity *x.* It can easily be shown that when *v_{q}* ≠ 0, then ${ε}_{{v}_{dq}}^{c} \neq 0$.

The estimation error may present a wrong Power Calculation and Reference Frame Misalignment: Restating the equation for *S_{c}* with respect to the voltage estimators: ${\hat{P}}_{c} = {\hat{v}}_{d}^{c} {\hat{ι}}_{d}^{c} + {\hat{v}}_{q}^{c} {\hat{ι}}_{q}^{c} = {P}_{c}^{⋆} + {ε}_{{P}_{c}} ,$ ${\hat{Q}}_{c} = {\hat{v}}_{q}^{c} {\hat{ι}}_{d}^{c} - {\hat{v}}_{d}^{c} {\hat{ι}}_{q}^{c} = {Q}_{c}^{⋆} + {ε}_{{Q}_{c}} .$

Hence, when *v_{q}* ≠ 0, it further implies that the power calculation is wrong, i.e., (*Pₒ Q_{c}*) ≠ (*P̂_{c}, Q̂_{c}*). Consequently, the ability to control the voltage and reject a voltage disturbance is challenged if the GFM VSC only utilizes PBS.

The estimation error may present a vulnerability to Phase Perturbations: Because the power calculation is prone to errors, resynchronization may become an issue after a phase jump, as the controller could become "disoriented" from the reference frame misalignment. In a steady state, it may be assumed that the impact on synchronization may be minimal and negligible by the small-angle approximation: $sin θ \approx θ , cos θ \approx 1 - \frac{{θ}^{2}}{2} \approx 1 .$

In other words, there is sufficient damping to oppose the impact of the small error.

However, perturbations caused by network reconfigurations can mimic phase jump events, in which a *v_{q}* component is induced to the controller.

To simplify the impact of phase perturbations in the dynamic phasor analysis, it is assumed in the following a minimal and negligible reference tracking error, such that ${v}_{dq}^{c , ⋆} ≃ {v}_{dq}^{c}$ in steady state.

Reference is made to FIG.s 4 and 5, illustrating the frame misalignment via a phasor representation. Both FIG.s 4 and 5 elaborate the reference frame misalignment in direct-quadrature coordinates by the impact of a phase jump.

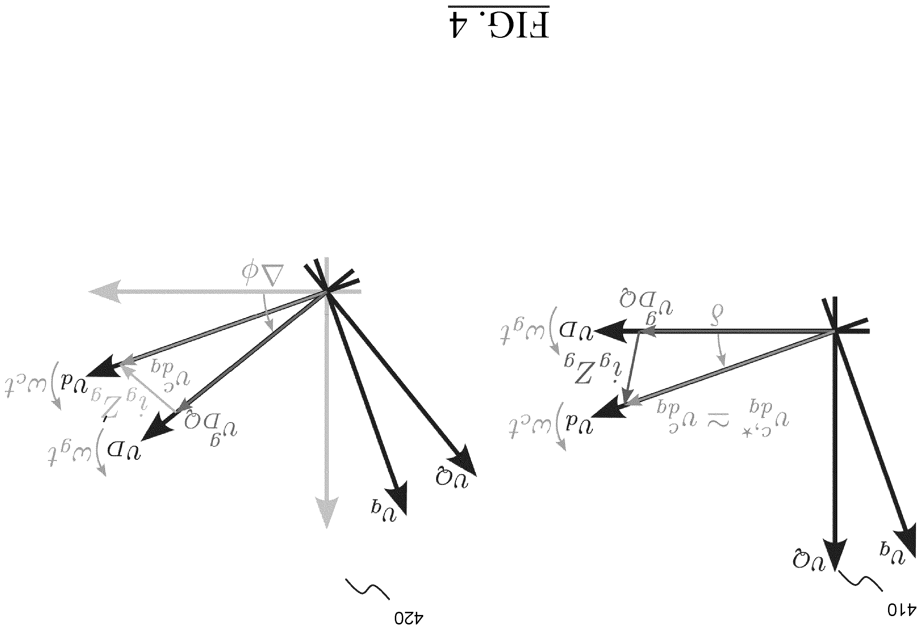

Reference is made to FIG. 4. The frame 410 illustrates that the initial reference frames in steady state, where the local dq-frame of the converter voltage ${v}_{dq}^{c}$ is phase-shifted with a load angle *δ* with respect to the global DQ-frame of the grid voltage ${v}_{DQ}^{g}$*.* The voltage drop across the grid impedance is given by *i_{g}Z_{g}.* The frame 420 illustrates that the initial grid voltage is perturbed by a phase jump Δ*ϕ*. Because the grid voltage is an infinite bus, the grid voltage vector instantaneously aligns with the *v_{D}* axis of the global DQ-frame. From the perturbation, the converter measures an active power mismatch because of the changed load flow induced by the change in load angle Δ*ϕ* . The incorrect voltage drop across the grid impedance is shown by *i_{g}Z_{g}'.*

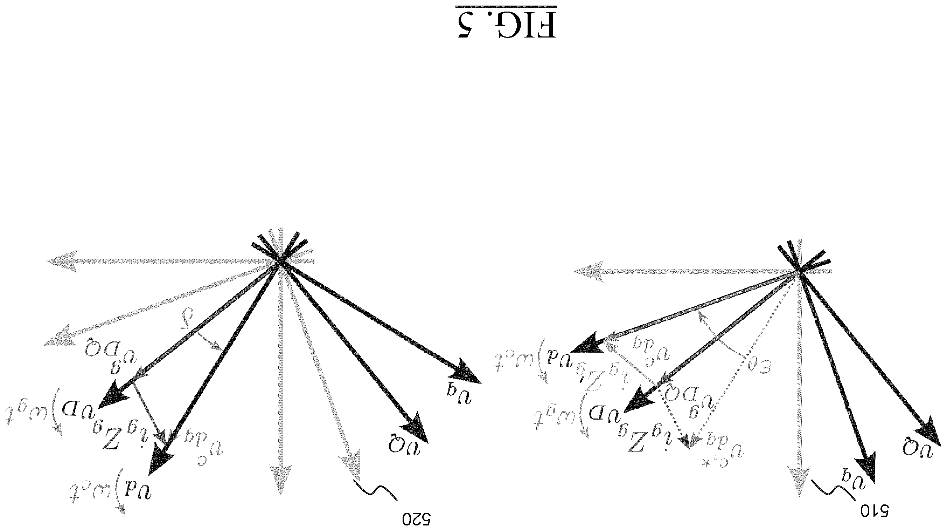

Reference is made to FIG. 5. The frame 510 illustrates that from the reference setpoints, an optimal voltage vector can be analytically defined as ${v}_{dq}^{c , ⋆}$, to which the converter now must align its voltage vector with. The associated and intended voltage drop from the load current is given by *i_{g}Z_{g},* which differs from realized voltage drop from *i_{g}Z_{g}'.* The capability of the converter to reach this depends on nonlinear control assessment, which is outside of the discussion. However, the angle estimation error ε*_{θ}* now causes the voltage estimation error discussed earlier, as the converter operates as it was aligned with ${v}_{dq}^{c , ⋆}$, but is given by ${v}_{dq}^{c}$. The frame 520 illustrates that assuming that the converter was able to re-synchronize to the new operating point, it is seen that the converter voltage vector ${v}_{dq}^{c}$ is properly aligned again as it reaches the desired *δ*.

The HSC may thus include a PBS and a VBS. Power based synchronization refers to control actions configured to synchronize the VSC to the electricity grid by regulating the exchange of active and reactive power between the VSC and the electricity grid. Voltage-based synchronization refers to control actions configured to synchronize the voltage output of the VSC (e.g., the frequency and phase of the voltage send from the VSC to the grid) with the voltage of the electricity grid.

The HSC may thereby obtain a frequency output *ω* of the VSC equal to: $ω = {ω}_{ref} + Δ {ω}_{P} + Δ {ω}_{v} .$ where *ω_{ref}* is a frequency reference. Δ*ω_{P}* is a frequency contribution by the PBS. Δ*ωᵥ* is a frequency contribution by the VBS.

In other words, the frequency is the sum of the frequency reference with the frequency contribution by the PBS and the frequency contribution by the VBS. Any frequency contribution by the VBS in a steady state results in an active power error. That is, a steady-state nonzero quadrature voltage is a disturbance to the frequency output *ω* of the VSC, such that it cannot achieve its active power setpoint.

The feedforward compensation may be applied to the frequency contribution by the PBS. The frequency contribution by the VBS, Δ*ωᵥ,* may be calculated as Δ*ωᵥ = kᵥv_{q},* where *kᵥ* is a proportional gain and *v_{q}* is the quadrature component from the Park transform of phase voltages in the electricity network. The steady-state active power error resulting from the VBS frequency contribution may then be cancelled by feedforwarding the VBS frequency contribution to the PBS loop. By feeding the feedforward compensation through some filter, the method can account for the steady-state active power error from the VBS frequency contribution, while providing a transient stability-enhancing response.

In examples, to compensate for the frequency contribution by the VBS, Δ*ωᵥ = kᵥv_{q},* the feedforward compensation applied to the PBS may be performed by dividing the active power droop constant *kₚ,* such that ${P}_{VBS} = {k}_{p}^{- 1} {k}_{v} {v}_{q} =$ ${k}_{p}^{- 1} Δ {ω}_{v}$*.* That is, the taking into account the equation of the frequency output *ω* of the VSC, the frequency contribution Δ*ω_{P}* including the feedforward compensation may be of the form Δ*ω_{P}* = Δ*P - kₚ* ⁻¹*kᵥv_{q}.* Thereby, the VBS frequency contribution vanishes from the equation of the frequency output *ω* of the VSC, that is, it may be calculated the following expression: $\begin{matrix}ω = {ω}_{ref} + Δ {ω}_{p} + Δ {ω}_{v} \\ ω = {ω}_{ref} + {k}_{p} \left(ΔP-{{k}_{p}}^{- 1}{k}_{v}{v}_{q}\right) + {k}_{v} {v}_{q} \\ ω = {ω}_{ref} + {k}_{p} Δ P\end{matrix}$

The frequency contribution by the PBS, *Δωₚ,* may be calculated as Δ*ω_{P}* = Δ*P - F*(*s*)*kₚ* ⁻¹*kᵥv_{q},* where Δ*P* is a power imbalance equal to Δ*P = P_{ref} - Pₘₑₐₛ, P_{ref}* is a reference power, *Pₘₑₐₛ* is a measured power. *F(s)* is a transfer function. *kₚ* is an active power droop constant. By "transfer function" it is meant a Laplace transform expression in the frequency domain, so that s denotes the Laplace variable. Thereby, the frequency output *ω* of the VSC follows an expression of the form: $\begin{matrix}ω = {ω}_{ref} + Δ {ω}_{p} + Δ {ω}_{v} \\ ω = {ω}_{ref} + {k}_{p} \left(ΔP-F\left(s\right){{k}_{p}}^{- 1}{k}_{v}{v}_{q}\right) + {k}_{v} {v}_{q} \\ ω = {ω}_{ref} + {k}_{p} Δ P + \left(1-F\left(s\right)\right) {k}_{v} {v}_{q}\end{matrix}$

The use of a transfer function (as exemplified below in Table I) improves transient stability while being able to match the setpoints in steady state.

The transfer function *F*(*s*) may be a lagging filter. By "lagging filter" it is meant a transfer function having the property that the property that the output value goes to the input value over time, i.e., *y*(*t*) → *u*(*t*) as *t* →∞.

The method thus results that active power reference is adjusted to cancel the frequency contribution from the VBS when a persistent and uncontrollable *v_{q}* disturbance is present.

The lagging filter may comprise a term equal to *F*(*s*) = 1/(1 *+ sτ*)*. τ* may be a predetermined time constant. *τ* may be greater than zero, it may be chosen in any manner. In examples, the lagging filter may be defined in terms of the limit points of s, e.g., the lagging filter may be any transfer function (such as a low pas filter) where *F*(*s*) → 1 as s → 0. And *F*(*s*) → 0 as *s* → ∞.

The lagging filter may be one a low-pass filter of the type: *F*(*s*) = 1/(1 *+ sτ*)*. τ* may be a predetermined time constant. Alternatively, the lagging filter may be a lag-compensator of the type *F*(*s*) *=* (1 + *sτ*₁)/(1 *+ sτ*₂)*. τ*₁ and *τ*₂ are predetermined time constants. *τ*₁ and *τ*₂ are greater than zero. *τ₂* may be greater than *τ*₁.

In examples, the lag compensator may be defined in terms of the limit points of s, e.g., the lag compensator may be any transfer function where $F \left(s\right) \to \frac{{τ}_{1}}{{τ}_{2}} < 1$ as *s*→∞.

Alternatively, the lagging filter may be a mode activation (MA) filter. The mode activation filter may have a value of zero if *v_{q}* is above a predetermined threshold and one otherwise.

In examples, regarding the practical implementation of the MA, an activation signal may be fed through a monostable loop, that holds the value "0" for a period of time τ so as to avoid signal-flickering.

Reference is made to Table I, illustrating examples of the lagging filter.

**Table I. Examples of lagging filter.**

| Function | *F*(*s*) |
|---|---|
| Low-pass filter (LPF) | *F*(*s*) = 1/(1+ *s*τ) |
| Lag-compensator (LC) | *F*(*s*) *=* (1+ *sτ*1)/(1+ *sτ*2) |
| Mode activation (MA) | $F \left(s\right) = \left\{\begin{matrix}0 , \left\|{v}_{q}\right\| > 0.05 \\ 1 , otherwise\end{matrix}\right.$ |

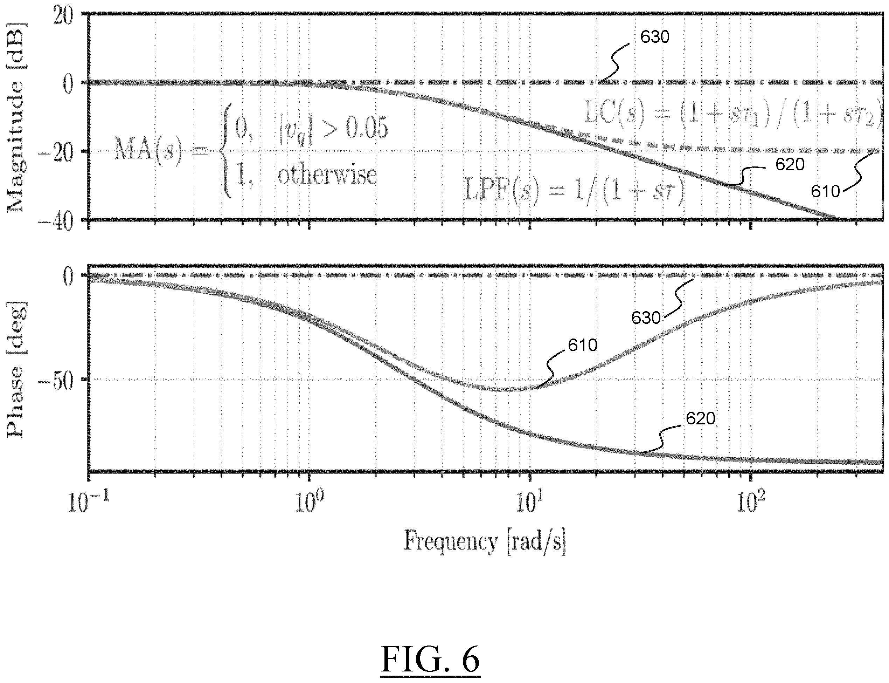

Reference is made to FIG. 6, showing a Bode diagram of the phase and magnitude response of a lag compensator 610, a low pass filter 620 and a Mode activation function 610. The responses are obtained for τ = τ₂ = 0.4 s and *τ*₁ = 0.04 s. The lag compensator 610 coincides with the low pass filter 620 if τ = τ₂ and τ₁ = 0. However, given *τ*₁ > 0, the LC varies from the LPF by maintaining the phase for high and low frequencies but having constant magnitude for higher frequencies.

Simulations were performed to compare the proposed solution to prior art controllers, that are denoted as HSC-I and HSC-II hereinbelow and now discussed.

### Typical hybrid synchronization control (HSC-I)

GFM and PLL techniques known in the art synchronize by calculating a frequency, which then is integrated to get the phase, such that $θ = \int ω d t$

The droop-based power synchronization control (PSC) calculates the frequency as per the equation: $\begin{matrix}ω & = {ω}_{ref} + Δ {ω}_{P} \\ & = {ω}_{ref} + {k}_{p} {{\left({P}_{ref}-{P}_{meas}\right)}_{︸}}_{Δ P}\end{matrix}$ where *ω_{ref}* is the frequency reference in per unit.

The basic HSC known in the art, denoted HSC-I, utilizes both PBS and VBS, so that the frequency is given by: $\begin{matrix}ω & = {ω}_{ref} + Δ {ω}_{P} + Δ {ω}_{v} \\ & = {ω}_{ref} + {k}_{p} Δ P + {k}_{v} {v}_{q} ,\end{matrix}$ where Δ*ω_{P}* is the frequency contribution by the PBS and Δ*ωᵥ* is the frequency contribution by the VBS. HSC-I thus suffers from a steady-state active power error from the VBS frequency contribution, given by Δ*ωᵥ = kᵥv_{q}.*

### HSC with PI control (HSC-II)

The literature proposes two different implementations of the HSC with a proportional-integral (PI) control, denoted as HSC-II-P and HSC-II-V below.

Power-based PI control - HSC-II-P: As shown later in simulations below, HSC-I suffers from steady-state. Attempts have been made to solve this by adding an integral control action in the PBS. This makes of the PBS loop a PI control. The frequency output by the VSC is then calculated as $\begin{matrix}ω & = {ω}_{ref} + Δ {ω}_{P} + Δ {ω}_{v} \\ & = {ω}_{ref} + \left({k}_{p}^{P}+{k}_{p}^{I}/s\right) Δ P + {k}_{v} {v}_{q} ,\end{matrix}$

The swing equation-based integral control action provides inertia, as the frequency cannot change instantaneously. In this context, it must be added that this feature of GFM converters requires proper control of the energy balance and overcurrent scenarios.

Voltage-based PI control (PLL) - HSC-II-V: The inclusion of a phase lock loop (PLL) has been proposed to contribute to the synchronization, by compensating the *v_{q}* derived from the Park transform *T_{dqz}*(*θ*), where *θ* is the output angle of the APC. The frequency output by the VSC is then calculated as: $\begin{matrix}ω & = {ω}_{ref} + Δ {ω}_{P} + Δ {ω}_{v} \\ & = {ω}_{ref} + {k}_{p} Δ P + \left({k}_{v}^{P}+{k}_{v}^{I}/s\right) {v}_{q} ,\end{matrix}$

However, it has been found that HSC-II-V does not solve the problems associated with the active power offset, as there is still an error Δ*ωᵥ,* while jeopardizing stability with the additional integrator.

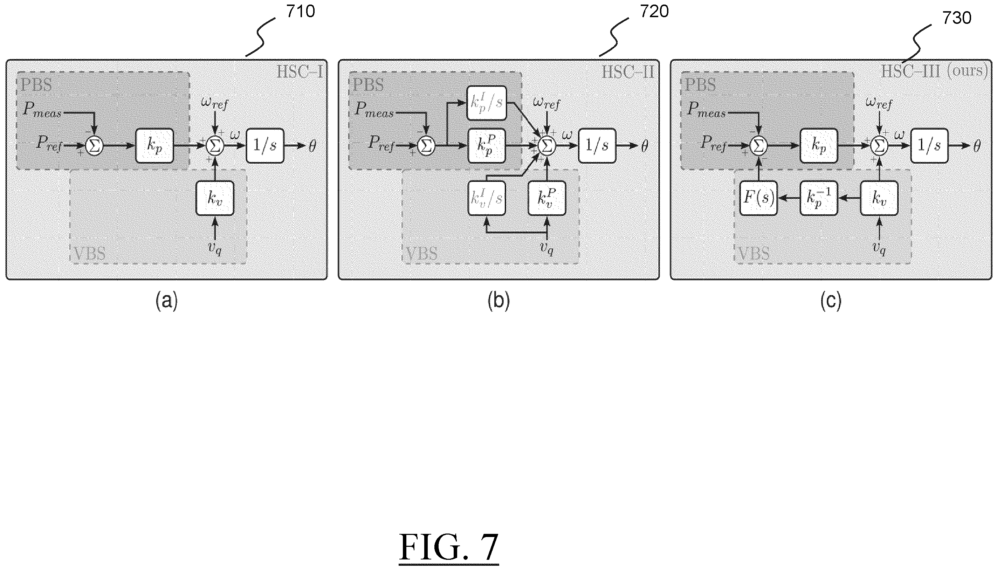

Reference is made to FIG. 7, illustrating a block diagram for HSC-I 710, a block diagram for HSC-II 720 and a block diagram for an implementation of a feedforward compensation according to the method, denoted as HSC-III 730.

The simulation results are now discussed.

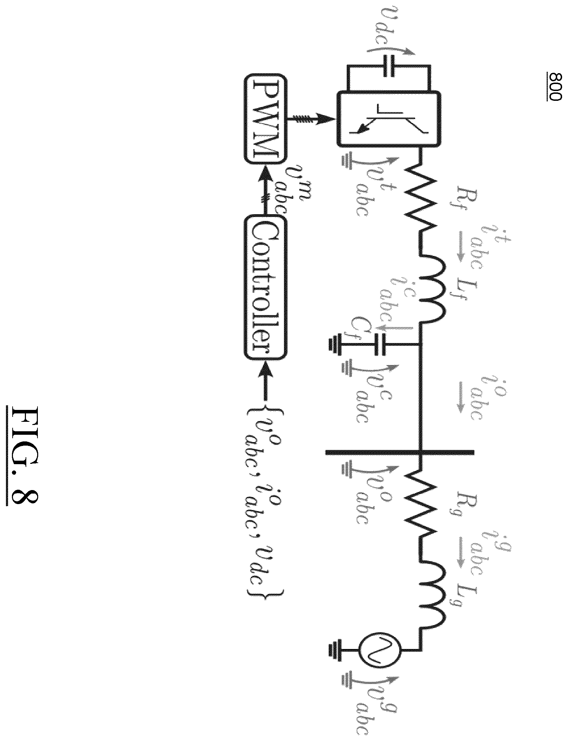

Reference is made to FIG. 8, illustrating a modification 800 of the single-converter infinite bus system shown FIG. 2. The modification is used to represent schematically the interconnection of the VSC with the grid according to the method. The modification includes a VSC, which interfaces with the grid via an impedance known as an LC filter in the art.

The power synchronization control (PSC) is identical to the HSC-I scheme if *kᵥ =* 0. It is very stable without inner control (IC) loops, but it cannot control the current magnitude. Therefore, it is considered that real applications make use of IC loops, to be able to limit the current. However, these loops deteriorate stability properties.

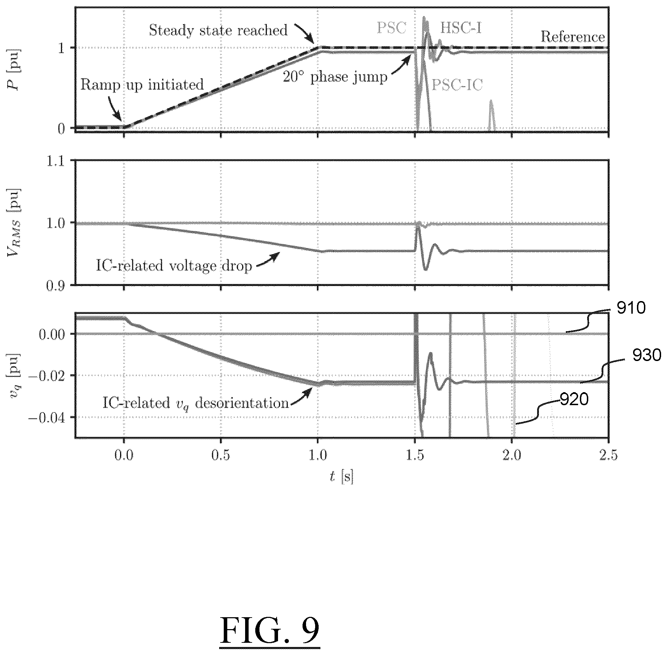

Fig. 9 illustrates a comparison between the transient response of the PSC with IC 910, without IC 920 and the HSC-I 930, where a 20∘ phase jump is applied after ramping up to a steady state. It is noted that all HSC schemes are combined with IC loops.

The PSC has perfect reference tracking and that the bandwidth-limited inner control provides an error in the voltage magnitude and the *v_{q}* component. Consequently, when the phase jump is applied, the PSC-IC 920 loses synchronization and becomes unstable.

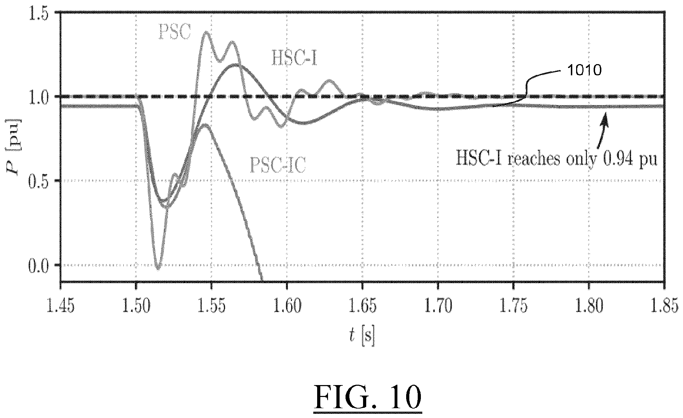

FIG. 10 illustrates a more detailed simulation of the active power. It can be seen that the output by the HSC-I 1010 is not capable to settle at the active power reference point of 1.0 pu.

The active power error, denoted as *Pₘₑₐₛ* ≠ *P_{ref},* is induced by the constant frequency contribution from the *v_{q}* ≠ 0 component in the HSC-I.

A comparison between the method (HSC-III) and prior art proposals HSC-I and HSC-II is now discussed.

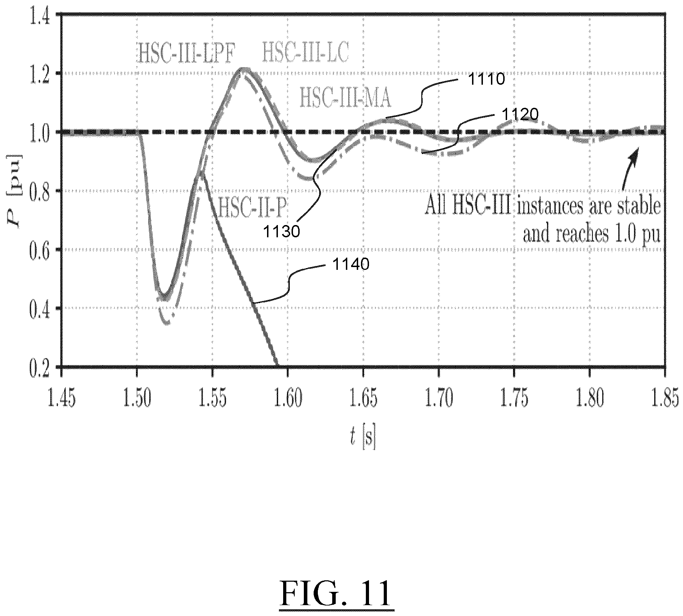

FIG. 11 illustrates a transient response to a 20∘ phase jump for the HSC according to the method, wherein the lagging filter is the low-pass filter HSC-III LPF 1110, the lagging filter is the lag-compensator HSC-III-LC 1120 and the lagging filter is the mode activation filter, HSC-III-MA 1130, compared with the response of HSC-II-P 1140.

The response of HSC-II-P 1140 becomes unstable, compared to the HSC-I, because of the additional integral control action on the active power difference Δ*P*. However, the control according to the method, 1110-1130 are stable and settle at the reference active power. The variants according to the method 1110-1130 have almost similar responses from the FFC.

Further simulations with reference to examples of the proposed solution are now discussed.

It is shown how a virtual control compensation on the *v_{q}* component in the outer loop must be discounted by the HSC, such that the ${v}_{q} = {v}_{q}^{meas} - {v}_{q}^{comp}$, where ${v}_{q}^{meas}$ and ${v}_{q}^{comp}$ are the quadrature voltage measurement and compensation term from converter control, respectively. The IC loops should not contribute to the compensation because these are merely designed to cancel the voltage drop and phase shift from the electrical interface to the system (such as transformers, reactors, and filters), while allowing some current limitation. So, without loss of generality, the effect of proper compensation is demonstrated by implementing the algebraic cross-coupling virtual impedance (CCVI). Consider the CCVI outputting the voltage drop ${v}_{dq}^{vi}$ given the measured current **i***_{dq}*. ${v}_{dq}^{vi} = {R}_{v} {{\left[\begin{matrix}1 & 0 \\ 0 & 1\end{matrix}\right]}^{︷}}^{J} {i}_{dq} + {L}_{v} {{\left[\begin{matrix}0 & - 1 \\ 1 & 0\end{matrix}\right]}^{︷}}^{J} {i}_{dq} .$

The CCVI couples the voltage control with the current dynamics. However, the virtual inductance *Lᵥ* contributes to a *v_{q}* component, which, by design, is not part of the reference frame misalignment.

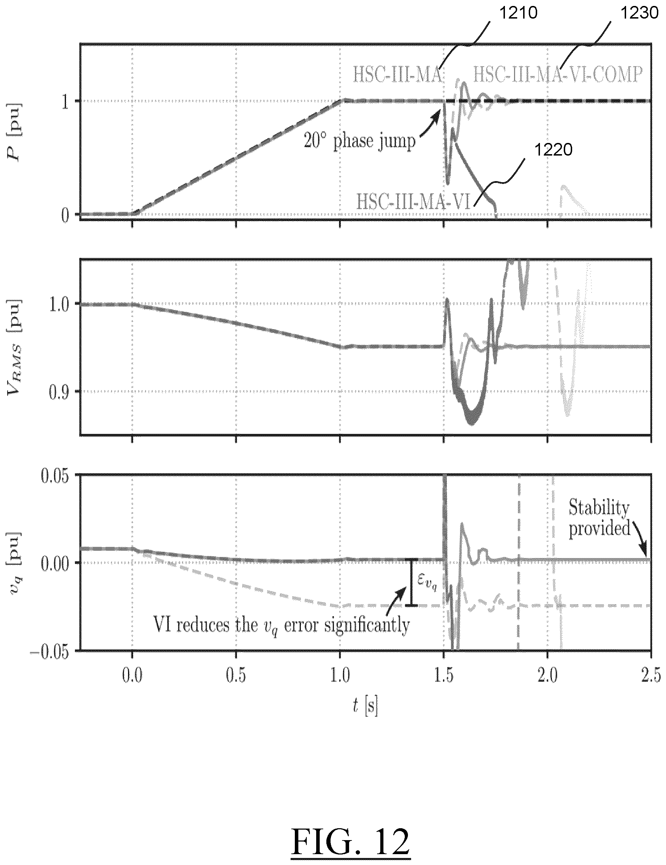

Reference is made to Fig. 12. An implementation according to the method, HSC-III with a mode activation (MA) filter, is plotted without a virtual impedance 1210, d with a virtual impedance loop 1220, and additionally one with compensating the *v_{q}* contribution from the VI loop 1230.

One artifact from the VI is that it has a lower *v_{q}* component. The fact that *v_{q}* goes to approximately zero at full load depends on the tuning of the VI loop, which is chosen arbitrarily in this case. The HSC-III-MA-VI 1220 shows instability when the virtual impedance is activated but the associated ${v}_{dq}^{vi}$ is not compensated, such that the compensated *v_{q}* component is the measured quantity subtracted by the VI contribution, i.e., ${v}_{q} = {v}_{q}^{meas} - {v}_{q}^{vi}$*.*

The prior art HSC-I scheme has been found to jeopardize system stability in weak grids, when the inner controls are implemented in the dq-frame. In contrast, embodiments of the method also improve the transient stability in weak grid conditions.

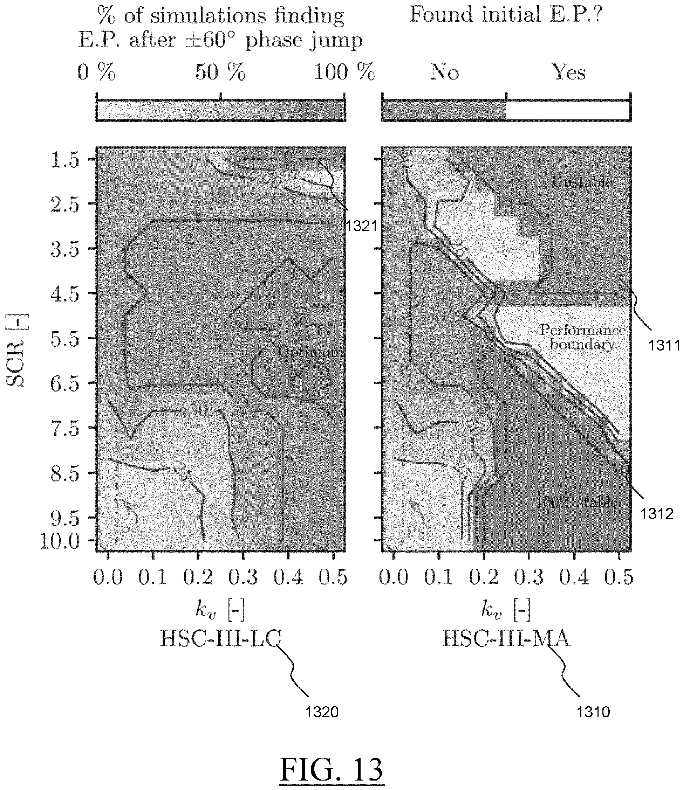

Reference is made to Fig. 13, illustrating contour plots mapping the performance of implementations according to the method, HSC-III-LC 1320 (where the lagging filter is lag compensator LC) and HSC-III-MA 1310 (wherein the lagging filter is the mode activation filter MA).

Cells marked as unstable 1311, 1321 denote grid and tuning conditions, by pairs of SCR and *kᵥ* respectively, where the converter could not reach an equilibrium point (EP) from the initial conditions. The range from white to dark gray denotes the percentage of simulations that can find an EP after a phase jump in the range of ±60∘. The sensitivity study is based on phase jumps in steps of 10° and a positive evaluation criterion is given by conjunction of : (a) the root-mean-square error between the RMS voltage pre-disturbance and the RMS voltage 300 ms post-disturbance is below 1%, and (b) the active power is greater than 90% at 700 ms.

The choice of these lagging filters are because the HSC-III-MA is equivalent to the prior art HSC-I during transients and the PSC in steady state. The LC is representing lagging-type filters, as LPF transfer functions are a subset of LC transfer functions.

The HSC-III-MA 1310 shows a sharp line 1312, where the converter is stable despite any severe phase jump being applied, to a minimal number of cases. When recalling that the HSC-III-MA is not unique to the feed forward compensation of the implementation, this shows the need for a moderate *kᵥ* to avoid instability. Furthermore, due to the resemblance to HSC-I, the performance is not good for weak grid conditions as expected and discussed in the literature. However, the HSC-III-LC 1320 clearly shows an improved transient stability range in weak grids compared to the PSC given by *kᵥ* = 0. There is still worse performance in ultra-weak grids, i.e., SCR = 1.5. However, the overall improved stability for general weak grids shows that the FFC variant of the HSC emphasizes the importance of the VBS in GFM-VSCs.

The method for controlling the VSC, including notably the feedforward compensation (FFC) takes into account for the frequency contribution of the voltage-based synchronization (VBS) loop, ensuring the capability to deliver requested active power, while having an increased transient stability performance in weak and strong grids.

Thus, the method enables grid compliance of GFM VSCs. In examples, the method may integrate a phase locking loop (PLL) into the feedforward compensation. The feedforward compensation may also comprise optimal lagging filters.

By synchronizing GFM-VSCs with power and voltage according to the method, increased transient robustness can be achieved.

For the sake of completeness, the effect of controller bandwidth on time-scale separation is now discussed, in order to illustrate that the cascaded control loops cannot be properly distributed because of the upper bandwidth limitation, as discussed earlier.

The grid-forming VSC with inner controls is a cascaded control system, and the bandwidth of the individual cascaded system can be considered independently. The Nyquist Shannon theorem implies a minimum separation requirement between control system frequencies to avoid aliasing. Therefore, for theoretical separation, each cascaded system's bandwidth must be at least double the previous, such that *f_{A} <* 2*f_{B}.* This is theoretically true, but assuming that we have infinite time. For practical implementations, a rule of thumb is to time-scale separate the loops with at least one decade, such that *f_{A}* ≤ 10*f_{B}.* Therefore, a factor *α* can be calculated to achieve an equidistant time-scale separation in logarithmic space for *N* cascaded systems. This allows an evaluation of each frequency *fᵢ = fₘᵢₙα*^{*i*-1} for i ∈ 1,2,...,*N*, where *α* is given by: $α = {\left(\frac{{f}_{max}}{{f}_{min}}\right)}^{\left(\frac{1}{N - 1}\right)}$

It is assumed a time scale separation between the current control and the modulation. By considering a nominal frequency at 50 Hz, a switching frequency at 2 kHz, and GFM-VSC with an outer loop and two cascaded inner control loops, for voltage and current control, in total three cascaded systems are considered. This provides an insufficient separation factor is achievable, i.e., *α* = 6.32≤ 10.

Reference is made to Table II, showing different bandwidth evaluations of the individual cascaded control systems are evaluated given various *N*.

**Table II. Evaluated bandwidths for various N cascaded systems.**

| **N** | ***α*** | ***f*1** | ***f*2** | ***f*3** | ***f*4** |
|---|---|---|---|---|---|
| 2 | 40.0 | 50.0 | 2000.0 | - | - |
| 3 | 6.32 | 50.0 | 316.23 | 2000.0 | - |
| 4 | 3.42 | 50.0 | 171.0 | 584.80 | 2000.0 |

Therefore, time-scale mixing is assumed for N≥ 3 cascaded control systems for high-power, bandwidth-limited GFM-VSCs.

Now, parameters of an example of implementation of the method are discussed, in particular parameters of the system (i.e., parameters of the electricity network), parameters of the VSC, and tuning parameters (i.e., parameters that specify the control). The simulation results provided earlier were obtained based on this implementation.

The system parameters may be as defined in table III.

**Table III. Table parameters.**

| **Parameter** | **Value** | **Unit** |
|---|---|---|
| *V_{base}* | 320 | kV |
| *S_{base}* | 1 | GW |
| *f_{base}* | 50 | Hz |
| SCR | 10 | |
| X/R | 10 | |

Where:
*V_{base}* denotes a base voltage,
*S_{base}* denotes a base steady state power flow,
*f_{base}* denotes a base frequency,
SCR denotes the short-circuit ratio, and
X/R denotes a reactance-resistance ratio.

Grid impedance Z may be considered herein as a function of the short-circuit ratio (SCR) and reactance-resistance ratio (*X*/*R*)*,* i.e., as an equation of the type: $Z \left(SCR,X/R\right) = {{\frac{{V}_{base}^{2}}{SCR ⋅ {S}_{base}} cos θ}^{︷}}^{R} + j {{\frac{{V}_{base}^{2}}{SCR ⋅ {S}_{base}} sin θ}^{︷}}^{X} ,$ where *θ* = arctan(X/R) is the impedance angle.

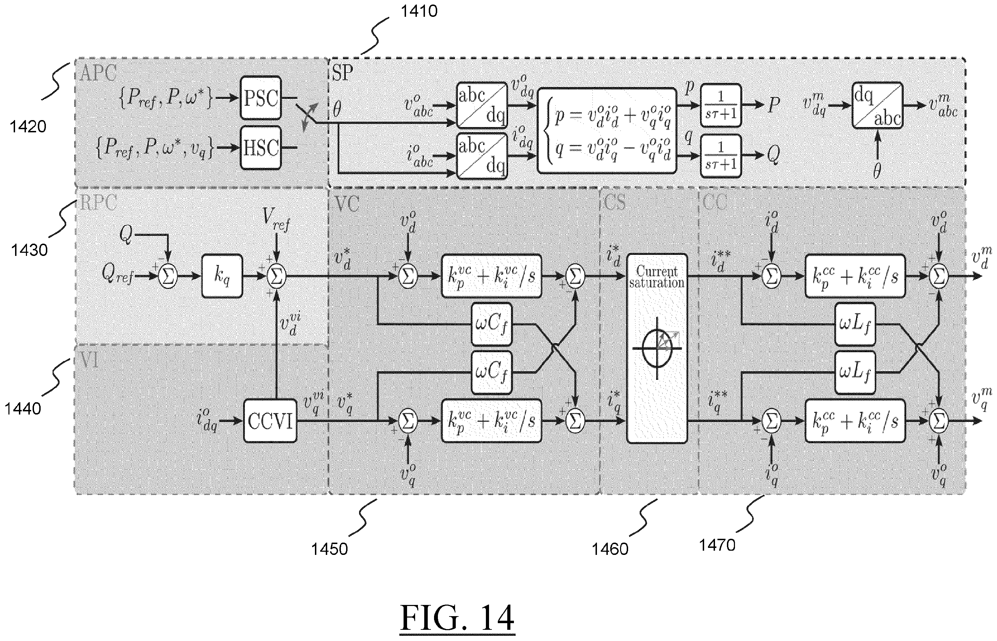

Reference is made to FIG. 14, showing a block diagram of controller parts. Signal processing (SP) 1410: Including Clarke-Park transformation of measurements, ${υ}_{dq}^{o}$ and ${i}_{dq}^{o}$, and inverse Clarke-Park transformation of generated modulation voltage ${v}_{dq}^{m}$. Power is calculated from measurements in dq-domain and filtered with a low-pass filter. Active Power Control (APC) 1420: The APC loop is either defined by the power synchronization control or the hybrid synchronization control loop. Reactive Power Control (APC) 1430: A droop-based reactive power control is considered. Virtual impedance (VI) 1440: A virtual impedance is considered in the outer loop to establish a coupling from the current dynamics to the internal voltage setpoint via the cross-coupling virtual impedance. Voltage Control (VC) 1450: Inner voltage control loop with phase-shift correction of the filter capacitance. Current Saturation (CS) 1460: Current saturation block in magnitude limiting mode. Current Control (CC) 1470: Inner current control loop with phase-shift correction of the filter inductance.

Table IV shows the parameters of the converter control.

**Table IV. Controller parameters.**

| **Parameter** | **Value** | **Unit** |
|---|---|---|
| *kₚ* | 0.1 | |
| *kᵥ* | 0.25 | |
| *k_{q}* | 0.05 | |
| ${k}_{i}^{vc}$ | 171 | |
| ${k}_{p}^{vc}$ | 8 | |
| ${k}_{p}^{cc}$ | 3 | |
| ${k}_{i}^{cc}$ | 585 | |
| *Iₗᵢₘ* | 1.4 | pu |
| *Rᵥ* | 0.00 | pu |
| *Lᵥ* | 0.03 | pu |
| *L_{f}* | 0.1 | pu |
| *C_{f}* | 0.066 | pu |
| *R_{f}* | 0.005 | pu |

It is noted that the time-scale separation factor *α* is used for deriving ${k}_{i}^{cc}$ and ${k}_{i}^{vc}$ using *fₘᵢₙ =* 50 Hz, *fₘₐₓ=* 2 kHz, and *N* = 4 Hz to avoid antialiasing effects between the current controller and the modulation loop.

## Claims

1. A method for controlling a voltage-source converter (VSC) connected to an electricity network, the method including:
performing a grid forming (GFM) control of the converter, including a hybrid synchronization control (HSC), and further including a feedforward compensation of a transform of phase voltages in the electricity network.

2. The method of claim 1, wherein the HSC includes a power-based synchronization (PBS) and a voltage-based synchronization (VBS), thereby obtaining a frequency output *ω* of the VSC equal to: $ω = {ω}_{ref} + Δ {ω}_{p} + Δ {ω}_{v} ,$ where:
*ω_{ref}* is a frequency reference,
Δ*ωₚ* is a frequency contribution by the PBS, and
Δ*ωᵥ* is a frequency contribution by the VBS.

3. The method of claim 2, wherein the feedforward compensation is applied to the PBS, Δ*ωᵥ* being calculated as *Δωᵥ = kᵥv_{q},* where *kᵥ* is a proportional gain and *v_{q}* is the transform of phase voltages in the electricity network.

4. The method of claim 3, wherein Δ*ωₚ* is calculated as Δ*P - F*(*s*)*kₚ*^{*-*1}*kᵥv_{q},* where Δ*P* is a power imbalance equal to Δ*P = P_{ref} - Pₘₑₐₛ, P_{ref}* is a reference power, *Pₘₑₐₛ* is a measured power, *F*(*s*) is a transfer function, *kₚ* is an active power droop constant.

5. The method of claim 4, wherein the transfer function *F*(*s*) is a lagging filter.

6. The method of claim 5, wherein the lagging filter comprises a term equal to *F*(*s*) *=* 1/(1 *+ sτ*)*,* where *τ* is a predetermined time constant.

7. The method of claim 5, wherein the lagging filter is one of :
- a low-pass filter of the type: *F*(*s*) = 1/(1 *+ sτ*)*,* or
- a lag-compensator of the type *F*(*s*) *=* (1 + *sτ*₁)/(1 *+ sτ*₂).
where *τ*, *τ*₁ and *τ*₂ are predetermined time constants.

8. The method of any one of claims 1 to 7, wherein the electricity network is a three-phased network.

9. The method of claim 8, wherein the electricity network is a weak grid network.

10. The method of claim 8 or 9, wherein the electricity network comprises wind turbines, solar generators and/or photovoltaic generators.

11. The method of any one of claims 8 to 10, wherein the transform (*v_{q}*) of phase voltages in the electricity network is a quadrature component of a Park transformation of three-phase voltages of the electricity network.

12. A computer program comprising instructions for causing a processor to control a voltage-source converter (VSC) connected to an electricity network according to the method of any one of claims 1 to 11.

13. A computer readable storage medium having recorded thereon a computer program of claim 12.

14. A system configured for controlling a voltage-source converter (VSC) connected to an electricity network according to the method of any one of claims 1 to 11.
